# EUROPÄISCHE PATENTSCHRIFT

(11) **EP 1 624 656 B1**
(45) Veröffentlichungstag und Bekanntmachung des Hinweises auf die Patenterteilung: **24.02.2010**
(21) Anmeldenummer: 05012783.6
(22) Anmeldetag: 14.06.2005
(51) Int. Cl.: H04M 3/533, H04L 12/58

(54) **Anordnung mit einer Telekommunikationseinrichtung und einer Datenverarbeitungsvorrichtung zur einheitlichen Abwesenheitsbenachrichtigung**
Arrangement comprising a telecommunication device and a data processing unit for unified absence notification
Arrangement comprenant un dispositif de télécommunications et une unité de traitement de données pour délivrer un avis d'absence unitaire

(30) Priorität: 04.08.2004 DE 102004037861
(43) Veröffentlichungstag der Anmeldung: 08.02.2006
(73) Patentinhaber: Fujitsu Siemens Computers GmbH, 80807 München (DE)
(72) Erfinder: Landsperger, Jürgen, 86391 Stadtbergen (DE)
(74) Vertreter: Epping - Hermann - Fischer

(56) Entgegenhaltungen:
- EP-A- 0 621 715
- US-A1- 2002 090 069
- US-B1- 6 580 787
- ANONYMOUS: "Unified out of office assistant" RESEARCH DISCLOSURE, MASON PUBLICATIONS, HAMPSHIRE, GB, Bd. 492, Nr. 85, April 2005 (2005-04), XP007135026 ISSN: 0374-4353
- PATENT ABSTRACTS OF JAPAN Bd. 016, Nr. 444 (E-1265), 16. September 1992 (1992-09-16) & JP 04 156039 A (FUJITSU LTD), 28. Mai 1992 (1992-05-28)

## Beschreibung

Die Erfindung betrifft eine Anordnung mit einer Telekommunikationseinrichtung aufweisend einen benutzerspezifischen ersten Abwesenheitsassistenten und erste Eingabemittel zur Aktivierung oder Deaktivierung des ersten Abwesenheitsassistenten und einer Datenverarbeitungsvorrichtung zur Bereitstellung einer E-Mail-Funktion aufweisend einen benutzerspezifischen zweiten Abwesenheitsassistenten und zweite Eingabemittel zur Aktivierung oder Deaktivierung des zweiten Abwesenheitsassistenten.

Übliche Büroarbeitsplätze sind sowohl mit einer Telekommunikationseinrichtung als auch mit einer Datenverarbeitungsvorrichtung ausgestattet. Die Telekommunikationseinrichtung wird zur Sprach-Kommunikation verwendet, während die Datenverarbeitungsvorrichtung beispielsweise zur Kommunikation mittels E-Mail eingesetzt wird. Moderne Telekommunikationseinrichtungen sind dabei auch mit PC-Schnittstellen ausgestattet, sodass beispielsweise aus einem von der Datenverarbeitungsvorrichtung verwalteten Adressprogramm heraus die Telefonnummer eines anzurufenden Gesprächspartners ausgewählt werden kann und die Telekommunikationseinrichtung daraufhin automatisch die gewünschte Nummer wählt.

Eine Gemeinsamkeit bei der Kommunikation mittels Telefon und der Kommunikation mittels E-Mail besteht darin, dass ein Anrufer beziehungsweise ein E-Mail-Sender den gewünschten Kommunikationspartner nur dann erreicht, wenn dieser an seinem Arbeitsplatz ist. Die Telekommunikationseinrichtung und die Datenverarbeitungsvorrichtung bieten deshalb häufig die Möglichkeit, für einen Anrufer beziehungsweise E-Mail-Sender eine Nachricht zu hinterlassen, über die dem Anrufer beispielsweise mitgeteilt wird, dass der gewünschte Gesprächspartner nicht anwesend ist und wann er gegebenenfalls wieder zu erreichen ist. Programme zur Abwicklung von E-Mail-Verkehr sind häufig dazu eingerichtet, eine so genannte Abwesenheitsnotiz zu versenden, wenn der Empfänger nicht anwesend ist. Dabei gibt der Benutzer vorab eine Nachricht ein, die an den E-Mail-Sender zurückgeschickt wird. So wird der E-Mail-Sender informiert, dass seine E-Mail nicht bearbeitet werden kann und wann er frühestens mit einer Antwort rechnen kann. Derartige Funktionen werden im Folgenden allgemein als Abwesenheitsassistenten bezeichnet. Sie beinhalten unter Umständen auch die Möglichkeit, Anrufe oder E-Mails automatisch zu beantworten.

Trotz einer Kopplung einer Telekommunikationseinrichtung mit einer Datenverarbeitungsvorrichtung ist es verhältnismäßig aufwändig, überall eine Abwesenheitsnachricht zu speichern und die jeweiligen Abwesenheitsassistenten zu aktivieren. Dies führt dazu, dass oftmals ein Anrufer oder ein E-Mail-Sender nicht über die Abwesenheit des gewünschten Kommunikationspartners informiert wird.

Aus der US 2002/0090069 A1 sind Vorrichtungen und Verfahren bekannt, bei denen zur Konfiguration von Abwesenheitsassistenten benötigten Daten aus einem computer-basierten persönlichen Zeitplaner übernommen werden. Dazu werden persönliche Abwesenheitszeiten durch einen Benutzer in dem computer-basierten persönlichen Zeitplaner eingetragen.

Aufgabe der Erfindung ist es, eine Anordnung mit einer Telekommunikationseinrichtung und einer Datenverarbeitungsvorrichtung anzugeben, die die oben genannten Probleme beseitigt.

Diese Aufgabe wird durch eine Anordnung der eingangs genannten Art gelöst, die dadurch gekennzeichnet ist, dass die Telekommunikationseinrichtung und die Datenverarbeitungsvorrichtung über wenigstens eine Schnittstelle miteinander verbunden sind und derart eingerichtet sind, dass durch eine Aktivierung des ersten Abwesenheitsassistenten durch die ersten Eingabemittel oder des zweiten Abwesenheitsassistenten durch die zweiten Eingabemittel eine automatische Aktivierung des anderen Abwesenheitsassistenten bewirkt wird.

Einerseits kann also eine Aktivierung des Abwesenheitsassistenten der Datenverarbeitungsvorrichtung eine Aktivierung des Abwesenheitsassistenten der Telekommunikationseinrichtung bewirken. Andererseits kann eine Aktivierung des Abwesenheitsassistenten der Telekommunikationseinrichtung eine Aktivierung des Abwesenheitsassistenten der Datenverarbeitungsvorrichtung bewirken. Selbstverständlich lassen sich die beiden Lösungen miteinander kombinieren, so dass es zum gleichen Ergebnis führt, ob zunächst der Abwesenheitsassistent der Telekommunikationseinrichtung oder der Abwesenheitsassistent der Datenverarbeitungsvorrichtung aktiviert werden.

Eine besonders vorteilhafte Erweiterung der erfindungsgemäßen Anordnung besteht darin, eine Vorrichtung zur Personenkontrolle einzubeziehen, die das Verlassen eines räumlichen Bereichs oder das Betreten des räumlichen Bereichs der Anordnung überwacht. Beim Verlassen des räumlichen Bereichs werden die Abwesenheitsassistenten aktiviert, während sie beim Betreten des räumlichen Bereichs deaktiviert werden.

Darüber hinaus ist es von Vorteil vorzusehen, dass beide Abwesenheitsassistenten auf eine gemeinsame Nachricht zugreifen. Günstig ist es dabei, in der Datenverarbeitungsvorrichtung einen geschriebenen Text zu hinterlegen, der von einer "Computerstimme" vorgelesen werden kann.

Weitere vorteilhafte Ausgestaltungen der Erfindung sind in den Unteransprüchen angegeben.

Die Erfindung wird nachfolgend anhand von Ausführungsbeispielen näher erläutert. Es zeigt:
Figur 1 ein erstes Ausführungsbeispiel einer erfindungsgemäßen Anordnung,
Figur 2 ein zweites Ausführungsbeispiel einer erfindungsgemäßen Anordnung mit einem zentralen Speicher,
Figur 3 ein drittes Ausführungsbeispiel einer erfindungsgemäßen Anordnung mit einer Personenkontrolleinrichtung und
Figur 4 ein viertes Ausführungsbeispiel einer erfindungsgemäßen Anordnung mit einem Wireless-LAN-Gerät.

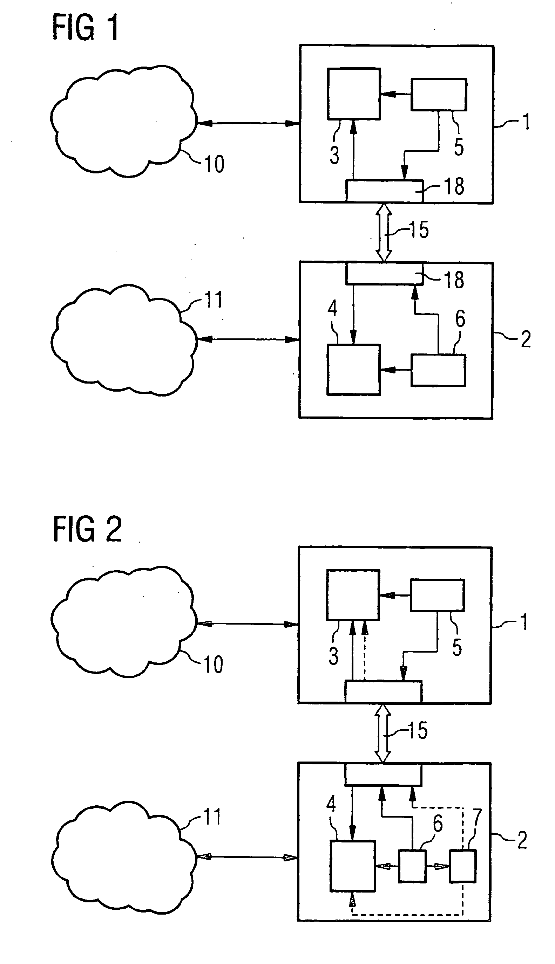

In der Figur 1 ist eine Anordnung mit einer Telekommunikationseinrichtung 1 und einer Datenverarbeitungsvorrichtung 2 dargestellt. Die Telekommunikationseinrichtung 1 ist mit einem privaten oder öffentlichen Telefonnetz 10 verbunden, während die Datenverarbeitungsvorrichtung 2 mit einem Computernetzwerk 11 verbunden ist, beispielsweise dem Internet.

Die Telekommunikationseinrichtung 1 weist als Abwesenheitsassistenten 3 eine benutzerspezifische Anrufbeantworterfunktion auf. Wenn der Abwesenheitsassistent 3 deaktiviert ist, werden eingehende Anrufe direkt von einem Benutzer angenommen. Bei einer Aktivierung des Abwesenheitsassistenten wird ein eingehender Anruf automatisch entgegengenommen, nachfolgend wird ein Ansagetext ausgegeben und der Anrufer erhält optional die Möglichkeit, eine Nachricht zu hinterlassen. Der Ansagetext umfasst häufig die Information, wann der angerufene Benutzer wieder erreichbar sein wird.

Vor einer Aktivierung des Abwesenheitsassistenten 3 muss diesem mitgeteilt werden, welcher Ansagetext ausgegeben werden soll, d. h. insbesondere wann der Benutzer wieder erreichbar sein wird. Dazu sind Eingabemittel 5 vorgesehen, die beispielsweise Mittel zur Spracheingabe umfassen und die auch die Möglichkeit bieten, den Abwesenheitsassistenten 3 der Telekommunikationseinrichtung 1 zu aktivieren oder zu deaktivieren.

In der schematischen Darstellung von Figur 1 ist die Telekommunikationseinrichtung 1 als ein Block dargestellt, wobei dies auch Telekommunikationseinrichtung umfasst, die als verteilte Systeme realisiert sind. Ein Benutzer hat Zugriff auf ein Endgerät, das beispielsweise an seinem Arbeitsplatz aufgestellt ist. Das Endgerät ist mit einer zentralen Vermittlungseinrichtung verbunden,'die einerseits die unternehmensinterne Gesprächsvermittlung übernimmt und andererseits eine Schnittstelle zu einem öffentlichen Telefonnetz bildet. Der benutzerspezifische Abwesenheitsassistent kann entweder in dem Endgerät oder in der Zentrale realisiert sein.

Die Datenverarbeitungsvorrichtung 2 weist ebenfalls einen Abwesenheitsassistenten 4 auf. Dieser realisiert eine automatische E-Mail-Beantworter-Funktion. Die Datenverarbeitungsvorrichtung 2 weist eine E-Mail-Funktion auf, d. h. sie kann E-Mails aus dem Computernetzwerk 11 empfangen und ein Benutzer der Datenverarbeitungsvorrichtung 2 kann E-Mails an einen über das Computernetzwerk 11 erreichbaren Empfänger senden. Bei einer Deaktivierung der automatischen E-Mail-Beantworterfunktion werden die empfangenen E-Mails gespeichert und ein Benutzer kann sie in der gewünschten Weise weiterverarbeiten. Bei einer aktivierten E-Mail-Beantworterfunktion wird zusätzlich zur Speicherung der Nachricht ein vorgegebener Antworttext an den Sender einer eingehenden E-Mail zurückgesendet. Dieser umfasst üblicherweise die Mitteilung, dass der gewünschte Empfänger derzeit nicht anwesend ist und erst zu einem bestimmten Datum wieder erreichbar sein wird. Dadurch weiß der Sender der E-Mail, dass seine Nachricht derzeit nicht bearbeitet wird wann er frühestens mit einer Bearbeitung rechnen kann.

Die Datenverarbeitungsvorrichtung 2 weist Eingabemittel 6 auf, mit denen der zu versendende Antworttext festgelegt werden kann und die eine Aktivierung oder Deaktivierung des Abwesenheitsassistenten 4 ermöglichen.

In der schematischen Darstellung von Figur 1 ist die Datenverarbeitungsvorrichtung 2 als ein Block dargestellt. Es muss sich jedoch nicht um einen einzelnen Computer handeln, sondern es kann sich auch um einen Server handeln, der mit einem Arbeitsplatzrechner gekoppelt ist. Wenn ein Benutzer abwesend ist, ist in der Regel auch sein Arbeitsplatzrechner ausgeschaltet, sodass er eine automatische E-Mail-Beantworter-funktion nicht bereitstellen kann. Diese ist statt dessen in einem Mailserver implementiert, der für jeden dort registrierten Benutzer die gewünschte E-Mail-Beantworterfunktion zur Verfügung stellt. Die Eingabemittel 6 können dagegen einem Arbeitsplatzrechner zugeordnet sein.

Die Datenverarbeitungsvorrichtung 2 ist mit der Telekommunikationseinrichtung 1 über eine datentechnische Verbindung 15 verbunden, wozu die Datenverarbeitungsvorrichtung 2 und die Telekommunikationseinrichtung 1 geeignete Schnittstellen 18 aufweisen.

Erfindungsgemäß ist die Anordnung derart eingerichtet, dass eine Aktivierung der Anrufbeantworterfunktion der Telekommunikationseinrichtung 1 eine Aktivierung der automatischen E-Mail-Beantworterfunktion bewirkt oder umgekehrt. Ein Benutzer muss deshalb nicht mehr daran denken, vor Verlassen seines Arbeitsplatzes bei beiden Geräten den Abwesenheitsassistenten 3 und 4 zu aktivieren, sondern es genügt die Aktivierung eines Abwesenheitsassistenten. Die Aktivierung des anderen Abwesenheitsassistenten erfolgt dann automatisch. Selbstverständlich hat ein Benutzer die Möglichkeit einzustellen, ob auch der andere Abwesenheitsassistent aktiviert werden soll. Dies ist insbesondere dann sinnvoll, wenn der Benutzer nur kurzzeitig abwesend ist, beispielsweise um an einer Besprechung teilzunehmen. Er hat dann nicht mehr die Möglichkeit, einen eingehenden Anruf entgegenzunehmen, so dass der Abwesenheitsassistent der Telekommunikationseinrichtung 1 aktiviert werden sollte. Eine sofortige Beantwortung eingehender E-Mails wird von E-Mail-Sendern jedoch nicht erwartet, so dass eine Aktivierung des Abwesenheitsassistenten 4 der Datenverarbeitungsvorrichtung 2 nicht erforderlich ist.

Die Figur 2 zeigt ein erweitertes Ausführungsbeispiel einer erfindungsgemäßen Anordnung. Bei dieser ist ein Speicher 7 in der Datenverarbeitungsvorrichtung 2 vorgesehen, auf den beide Abwesenheitsassistenten 3 und 4 zugreifen können. Dabei ist vorteilhaft, dass nur ein Antworttext eingegeben werden muss, der von dem Abwesenheitsassistenten 4 der Datenverarbeitungsvorrichtung 2 in Textform an einen E-Mail-Sender geschickt wird und der von dem Abwesenheitsassistenten 3 der Telekommunikationseinrichtung in vorgelesener Form als Ansagetext verwendet wird. Das Vorlesen einer in Textform gespeicherten Nachricht durch eine "Computerstimme" ist technisch problemlos machbar und es kann eine Sprachqualität erzielt werden, die für den Zweck einer Informationsübermittlung völlig ausreichend ist.

Die in dem Speicher 7 abzulegende Nachricht wird am einfachsten durch die Eingabemittel 6 erzeugt, da diese wie oben beschrieben für die Texteingabe geeignet sind. Für die Aktivierung der Abwesenheitsassistenten 3 und 4 spielt es keine Rolle, ob dies von der Telekommunikationseinrichtung 1 oder der Datenverarbeitungsvorrichtung 2 aus erfolgt.

Die Erzeugung der Abwesenheitsnachricht kann unter Zuhilfenahme der Datenverarbeitungsvorrichtung 2 automatisch erfolgen. Der Benutzer muss nur noch angeben, wann er wieder erreichbar sein wird. Die Abwesenheitsnotiz mit dem Inhalt wie beispielsweise "Herr Meier ist bis zum 29. Februar 2008 nicht erreichbar und wird sich nach seiner Rückkehr mit Ihnen in Verbindung setzen" kann dann automatisch erstellt werden. Bei kurzzeitiger Abwesenheit ist sogar eine vollständig automatische Erstellung möglich, indem als Tag der Rückkehr das Datum des nächsten Werktags eingesetzt wird. Besonders vorteilhaft bei einer automatischen Erstellung von Nachrichten ist, dass dies auch von einem entfernten Computer aus erfolgen kann. Wenn sich also beispielsweise eine Dienstreise verlängert, kann der Benutzer über eine Internet-Schnittstelle das Datum der Rückkehr aktualisieren.

Die Telekommunikationseinrichtung 1 übernimmt in der beschriebenen Weise den Text von der Datenverarbeitungsvorrichtung 2, sodass auch ein telefonischer Anrufer einen aktualisierten Ansagetext vorgelesen bekommt.

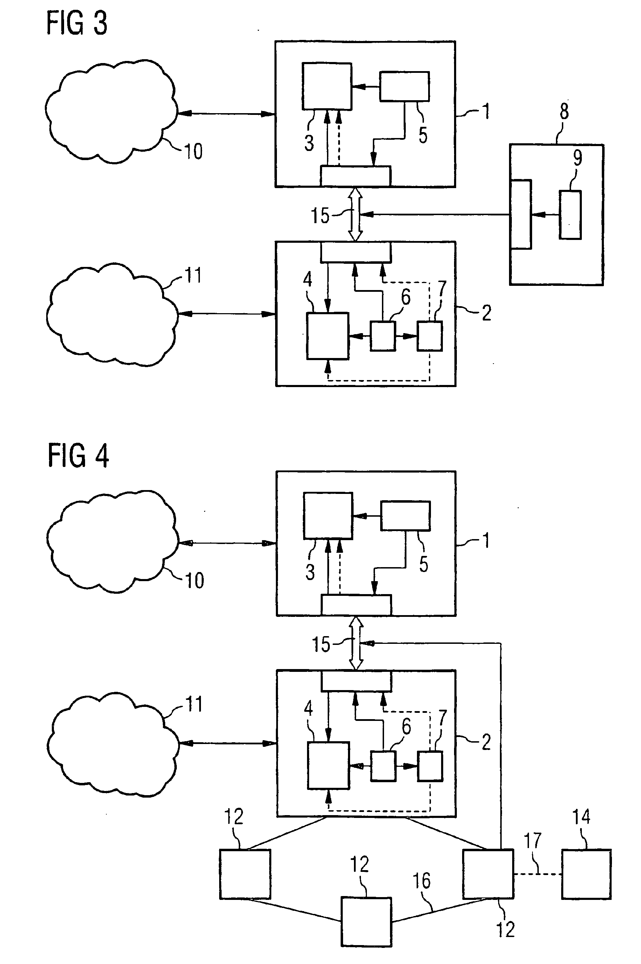

Bei dem Ausführungsbeispiel von Figur 3 ist eine zusätzliche Personenkontrolleinrichtung 8 vorgesehen. Derartige Personenkontrolleinrichtungen sind beispielsweise an der Pforte eines Firmengeländes vorgesehen, um sicherzustellen, dass nur berechtigte Personen das Firmengelände betreten. Dabei läßt sich auch die Zeit erfassen, wann Mitarbeiter anwesend sind.

Wenn ein Mitarbeiter das Firmengelände verlässt, ist er nicht mehr in der Lage, einen Anruf an seinem Arbeitsplatz entgegenzunehmen oder eine E-Mail zu beantworten. Die Personenkontrolleinrichtung 8 ist deshalb dazu eingerichtet, durch Verwendung entsprechender Mittel 9 und einer datentechnischen Verbindung die Abwesenheitsassistenten 3 oder 4 der Telekommunikationseinrichtung 1 oder der Datenverarbeitungsvorrichtung 2 zu aktivieren, wenn ein Mitarbeiter das Firmengelände verlässt. Dabei kann es sinnvoll sein, die Anordnung so zu konfigurieren, dass bei Verlassen des Firmengeländes nur der Abwesenheitsassistent 3 der Telekommunikationseinrichtung 1 aktiviert wird, während der Abwesenheitsassistent 4 der Datenverarbeitungsvorrichtung 2 deaktiviert bleibt. Wie oben ausgeführt, wird eine sofortige Beantwortung von E-Mails nicht erwartet, sodass beim Verlassen des Firmengeländes für kurze Zeit, beispielsweise bis zum nächsten Werktag, eine Versendung von Abwesenheitsnotizen nicht erforderlich ist.

Selbstverständlich ist es auch möglich, bei Betreten des Firmengeländes über die Personenkontrolleinrichtung 8 eine automatische Deaktivierung der Abwesenheitsassistenten 3 und 4 vorzunehmen.

Im Ausführungsbeispiel von Figur 4 ist eine weitere Möglichkeit gezeigt, eine automatische Aktivierung oder Deaktivierung der Abwesenheitsassistenten 3 und 4 auszulösen. Bei der gezeigten Anordnung ist ein lokales Computernetzwerk 16 vorgesehen, das auch als LAN (Local Area Network) bezeichnet wird. Das LAN 16 ist auch mit der Datenverarbeitungsvorrichtung 2 verbunden, die den Abwesenheitsassistenten 4 aufweist. Das LAN 16 weist Knoten 14 auf, beispielsweise einen Pocket-Computer, der über eine kontaktlose Verbindung 17 mit dem LAN 16 verbunden ist. Bei dieser als WLAN (Wireless Local Area Network) bezeichneten Technologie sind die dadurch angebundenen Geräte so lange als Teilnehmer in dem LAN 16 aktiv, wie sie sich in der Reichweite von WLAN-Stationen befinden. Die Reichweite ist optimalerweise so bemessen, dass auf einem Firmengelände eine gute Anbindung gewährleistet ist, die Reichweite aus Sicherheitsgründen aber nicht darüber hinaus geht. Wenn ein Mitarbeiter das Firmengelände verlässt, um eine Reise anzutreten oder nach Hause zu gehen, verlässt er auf jeden Fall die Reichweite des Wireless-LAN. In dem LAN 16 wird erkannt, dass ein Wireless-LAN-Gerät, das der Bearbeiter mit sich führt, den Netzwerkverbund verlässt. Aus dem Verlassen des Netzwerkverbundes kann deshalb geschlossen werden, dass der Benutzer auch nicht in der Lage sein wird, einen Anruf entgegenzunehmen oder eine eingehende E-Mail zu beantworten. Bei Verlassen des Netzwerkverbundes werden deshalb die Abwesenheitsassistenten 3 und 4 aktiviert. Umgekehrt können bei Eintreten des Wireless-LAN-Geräts in das Firmennetzwerk die Abwesenheitsassistenten 3 und 4 deaktiviert werden.

Die in der Figur 4 beschriebene Anordnung ist insbesondere dann sinnvoll einsetzbar, wenn keine Personenkontrolleinrichtung gemäß Figur 3 vorhanden ist.

Neben den beschriebenen Abwesenheits-Funktionen können selbstverständlich auch andere Komfort-Funktionen implementiert werden. Beispielsweise wird bei Abwesenheit eines Benutzers an den Sender einer E-Mail einer Abwesenheitsnotiz zurückgesendet, gleichzeitig wird die eingegangene E-Mail dem Benutzer auf ein Mobiltelefon oder an ein PDA mit GSM-Modul, beispielsweise über GPRS, weitergeleitet. Selbstverständlich ist auch eine automatische Gesprächsweiterleitung auf ein Mobiltelefon möglich.

Mittlerweile verbreitet ist das Telefonieren über ein Datennetzwerk mit einem IP-Protokoll. Bei dieser so genannten IP-Telefonie ist kein Telefon im herkömmlichen Sinn erforderlich, sondern das Telefonieren erfolgt über ein an einen Arbeitsplatzcomputer angeschlossenes Modul. Bei Einsatz einer solchen Telekommunikationseinrichtung, die auch in den Rahmen der Erfindung fällt, könnte der Abwesenheitsassistent durch das Ziehen und Stecken einer Chipkarte in einem dem Arbeitsplatz zugeordneten Lesegerät aktiviert beziehungsweise deaktiviert werden.

### Bezugszeichenliste

- 1: Telekommunikationseinrichtung
- 2: Datenverarbeitungsvorrichtung
- 3, 4: Abwesenheitsassistent
- 5, 6: Eingabemittel
- 7: Speicher
- 8: Personenkontrolleinrichtung
- 9: Mittel zur Aktivierung/Deaktivierung der Abwesenheitsassistenten
- 10: Telefonnetz
- 11: Datennetz
- 12: Computer
- 14: WLAN-Gerät
- 15: Verbindung zwischen Telekommunikationseinrichtung und Datenverarbeitungsvorrichtung
- 16: LAN
- 17: WLAN
- 18: Schnittstelle

## Patentansprüche

1. Anordnung mit
- einer Telekommunikationseinrichtung (1) aufweisend einen benutzerspezifischen ersten Abwesenheitsassistenten (3) und erste Eingabemittel (5) zur Aktivierung oder Deaktivierung des ersten Abwesenheitsassistenten (3) und
- einer Datenverarbeitungsvorrichtung (2) zur Bereitstellung einer E-Mail-Funktion aufweisend einen benutzerspezifischen zweiten Abwesenheitsassistenten (4) und zweite Eingabemittel (6) zur Aktivierung oder Deaktivierung des zweiten Abwesenheitsassistenten (4),
**dadurch gekennzeichnet, dass**
die Telekommunikationseinrichtung (1) und die Datenverarbeitungsvorrichtung (2) über wenigstens eine Schnittstelle (18) miteinander verbunden sind und derart eingerichtet sind, dass durch eine Aktivierung des ersten Abwesenheitsassistenten (3) durch die ersten Eingabemittel (5) oder des zweiten Abwesenheitsassistenten (4) durch die zweiten Eingabemittel (6) eine automatische Aktivierung des anderen Abwesenheitsassistenten (4, 3) bewirkt wird.

2. Anordnung nach Anspruch 1,
**dadurch gekennzeichnet, dass** ein Speicher (7) vorgesehen ist zur Speicherung eines Antworttextes, wobei die Telekommunikationseinrichtung (1) und die Datenverarbeitungsvorrichtung (2) auf den Speicher (7) zugreifen zum Auslesen eines bei Aktivierung auszugebenden Antworttextes.

3. Anordnung nach Anspruch 2,
**dadurch gekennzeichnet, dass** die Antworttexte für die Telekommunikationseinrichtung (1) und die Datenverarbeitungsvorrichtung (2) einheitlich sind.

4. Anordnung nach Anspruch 2,
**dadurch gekennzeichnet, dass** Mittel zum automatischen Erstellen eines Antworttextes aus vorgegebenen Zeitdaten vorgesehen sind.

5. Anordnung nach Anspruch 1,
**dadurch gekennzeichnet, dass** eine Personenkontrolleinrichtung (8) vorgesehen ist und ein mittels der Personenkontrolleinrichtung (8) erfasstes Entfernen eines Benutzers aus dem räumlichen Bereich der Anordnung eine Aktivierung zumindest eines Abwesenheitsassistenten (3, 4) bewirkt.

6. Anordnung nach Anspruch 1,
**dadurch gekennzeichnet, dass** eine Personenkontrolleinrichtung (8) vorgesehen ist und ein mittels der Personenkontrolleinrichtung erfasstes Eintreten eines Benutzers in den räumlichen Bereich der Anordnung eine Deaktivierung der Abwesenheitsassistenten (3, 4) bewirkt.

7. Anordnung nach einem der Ansprüche 1 bis 6,
**dadurch gekennzeichnet, dass** ein kontaktloses lokales Netzwerk (17) vorgesehen ist und eine Beendigung einer Netzwerkverbindung zu einem tragbaren Kommunikationsendgerät, das einem Benutzer zugeordnet ist, eine Aktivierung zumindest eines Abwesenheitsassistenten (3, 4) bewirkt.

## Claims

1. An arrangement comprising
- a telecommunications device (1) having a user-specific first absent-user assistant (3) and first input means (5) for activating or deactivating the first absent-user assistant (3), and
- a data processing device (2) for providing an e-mail function, comprising a user-specific second absent-user assistant (4) and second input means (6) for activating or deactivating the second absent-user assistant (4),
**characterized in that**
the telecommunications device (1) and the data processing device (2) are interconnected via at least one interface (18) and arranged such that upon activation of the first absent-user assistant (3) via the first input means (5) or of the second absent-user assistant (4) via the second input means (6), an automatic activation of the other absent-user assistant (4, 3) is induced.

2. The arrangement according to claim 1,
**characterized in that** a memory (7) is provided for storing a text reply, wherein the telecommunications device (1) and the data processing device (2) access the memory (7) for reading out a text reply to be output upon activation.

3. The arrangement according to claim 2,
**characterized in that** the text replies for the telecommunications device (1) and the data processing device (2) are uniform.

4. The arrangement according to claim 2,
**characterized in that** means are provided for automatically generating a text reply from preset time data.

5. The arrangement according to claim 1,
**characterized in that** a personal monitoring device (8) is provided and that when the personal monitoring device (8) detects that a user has left the spatial area of the arrangement, activation of at least one absent-user assistant (3, 4) is induced.

6. The arrangement according to claim 1,
**characterized in that** a personal monitoring device (8) is provided and that when the personal monitoring device detects that a user has entered the spatial area of the arrangement, deactivation of the absent-user assistants (3, 4) is induced.

7. The arrangement according to any one of claims 1 to 6,
**characterized in that** a contactless local network (17) is provided and a termination of a network connection to a portable communications terminal associated with a user induces an activation of at least one absent-user assistant (3,4).

## Revendications

1. Montage comportant
- un dispositif de télécommunication (1) présentant un premier assistant d'absence (3) spécifique à un utilisateur et des premiers moyens de saisie (5) pour l'activation ou la désactivation du premier assistant d'absence (3) et
- un dispositif de traitement de données (2) servant à fournir une fonction de courriel, présentant un deuxième assistant d'absence (4) spécifique à un utilisateur et des deuxièmes moyens de saisie (6) pour l'activation ou la désactivation du deuxième assistant d'absence (4),
**caractérisé en ce que**
le dispositif de télécommunication (1) et le dispositif de traitement de données (2) sont reliés entre eux par au moins une interface (18) et sont configurés de telle façon qu'une activation du premier assistant d'absence (3) par les premiers moyens de saisie (5) ou du deuxième assistant d'absence (4) par les deuxièmes moyens de saisie (6) provoque une activation automatique de l'autre assistant d'absence (4, 3).

2. Montage selon la revendication 1,
**caractérisé en ce qu'**une mémoire (7) est prévue pour la mémorisation d'un texte de réponse, le dispositif de télécommunication (1) et le dispositif de traitement de données (2) accédant à la mémoire (7) pour la sortie d'un texte de réponse à émettre en cas d'activation.

3. Montage selon la revendication 2,
**caractérisé en ce que** les textes de réponse pour le dispositif de télécommunication (1) et le dispositif de traitement de données (2) sont uniformes.

4. Montage selon la revendication 2,
**caractérisé en ce que** des moyens d'élaboration automatique d'un texte de réponse à partir de données temporelles prédéfinies sont prévus.

5. Montage selon la revendication 1,
**caractérisé en ce qu'**un dispositif de contrôle de personne (8) est prévu et qu'un éloignement détecté moyennant le dispositif de contrôle de personne (8) d'un utilisateur hors de la zone spatiale du montage provoque une activation d'au moins un assistant d'absence (3, 4).

6. Montage selon la revendication 1,
**caractérisé en ce qu'**un dispositif de contrôle de personne (8) est prévu et qu'une entrée détectée moyennant le dispositif de contrôle de personne d'un utilisateur dans la zone spatiale du montage provoque une désactivation des assistants d'absence (3, 4).

7. Montage selon l'une des revendications 1 à 6,
**caractérisé en ce qu'**un réseau local sans contact (17) est prévu et qu'une cessation d'une connexion de réseau à un terminal de communication portatif qui est assigné à un utilisateur provoque une activation d'au moins un assistant d'absence (3, 4).
